# EUROPEAN PATENT APPLICATION

(11) **EP 4 570 850 A1**
(43) Date of publication of application: **18.06.2025**
(21) Application number: 23216066.3
(22) Date of filing: 12.12.2023
(51) Int. Cl.: C08J 11/08, B29B 17/02, C08J 11/02, D06P 1/00, D06P 5/13, D06P 5/15

(54) **PROCESS AND PLANT FOR REMOVING DYES FROM WASTE TEXTILES**

(71) Applicant: Sanko Tekstil Isletmeleri San. Ve Tic. A.S., 16400 Inegol - Bursa (TR)
(72) Inventor: HAMITBEYLI, Agamirze, 16400 Inegol - Bursa (TR); LOYAN, Kenan, 16400 Inegol - Bursa (TR); AKBULUT, Sabrettin, 16400 Inegol - Bursa (TR); BAYRAK, Hikmet Nil, 16400 Inegol - Bursa (TR); ZENGIN, Nuriye, 16400 Inegol - Bursa (TR); AYDIN, Sevtap, 16400 Inegol - Bursa (TR)
(74) Representative: Gislon, Gabriele

(57) **Abstract**

In a process for recycling waste fabric comprising dyed polyester fibers or dyed cellulosic fibers, a polar solvent is flowed through the waste fabric in an extraction chamber to remove the dyes; the solvent is evaporated in an evaporation chamber and condensed to be sent to a solvent collection tank or back to the extraction chamber; any elastomeric material present in the waste textile is dissolved by the solvent during the treatment.

## Description

### Field of the invention

The present invention relates to a process and a plant for removing dyes from waste textiles in order to recycle textile material, such as fabrics, yarns, filaments and garments. In greater detail, the present invention relates to a process for recovering polyester material from waste fabrics and from garments containing polyester fibers and filaments, dyes and possibly also elastomeric material. The invention also relates to a process for recycling waste textile containing or consisting in dyed cotton fibers comprising indigo or indigoid dyes.

### State of the art

Recycling used fabrics, also known as "waste fabric", has become a primary target in the textile industry; new and efficient processes for recycling are being actively researched. One of the goals is to recycle the polyester fibers and filaments that are present in widely used fabrics. Another goal is to recycle cotton and cellulosic fabrics.

A problem in recycling polyester or cotton fabrics lies in the removal of dyes from the polyester or cotton fibers and filaments of the fabric.

WO2022118244 discloses recycling waste polyester material, including waste textiles by dissolving the polyester in a solution comprising hexafluoroisopropyl alcohol and a chlorinated hydrocarbon and/or an aromatic hydrocarbon. Before dissolution, a pre-treatment with dichloromethane (DCM) is carried out to remove color and impurities from PET bottles and waste textile material. This method does not provide an effective and complete removal of the dyes.

US2022169786 describes a method for producing a decolorized polyester by removing a colorant from a polyester with a decolorizing agent containing a glycol ether-type compound having a boiling point at atmospheric pressure of 160 °C or higher while heating the decolorizing agent to a temperature equal to or lower than a melting point of the polyester.

EP3699355 discloses a method and system for decolorizing textile waste materials, dyed with disperse dyes, under hydrothermal environment using dye adsorbent materials that are magnetically charged. Textile materials are treated under stirring in a decolorization reactor containing water and magnetic activated carbon as dye absorbing material, under autogenic pressure as obtainable when heating to about 100°C to 170°C. An ultrasonic generator (9) is started to accelerate release of the dye molecules from the textile materials into the water. The dyes released by the polyester fibers are adsorbed by the magnetic activated carbon that is collected by activating a magnetic field at the end of the process.

### Summary of the invention.

In general, the known methods result in a partial degradation of the polyester material or of the cotton fibers and in an only partial removal of the dyes if degradation is to be reduced by operating under mild conditions. Degradation of the polymer may be detrimental to the possibility of re-using the recovered polyester material. Similarly, degradation of the cotton fibers would jeopardize the mechanical properties and possibly also the appearance, of yarns produced by the recycled cotton fibers

In particular, it would be very useful to have a process that can remove all the decorations and the dyes, namely disperse dyes, from a dyed or printed polyester garment, or that can remove indigo and indigoid dyes from a cotton garment, without degrading the fabric and the garment, so that the thus treated, decolorized, garment may be dyed again with another color or printed to have a new print or decoration.

A further problem is that polyester based fabrics and garments may often contain polyurethane material, either as elastane-type filaments in the fabric yarns or as a layer printed on the garment as a decoration, e.g. in sport garments. The presence of the elastomeric material may be a problem when the polyester fibers are recycled. The same problem is present with cotton based fabrics and garments.

An aim of the present invention is to solve the above problem and to provide a process of recycling waste fabric containing or based on polyester, or a process of recycling a waste textile comprising or consisting in dyed cotton fibers comprising indigo or indigoid dyes, that provides a safe, easy and environmentally clean way of recovering the polyester material or the cotton material from waste textile by removing the dyes from said textile without or with reduced degrading of the polyester material or of the cotton material in the waste textile.

The decolorized polyester material may then be further recycled in a way known per se, e.g. by digesting the cellulose fibers (if present) or by depolymerizing the polyester, or by recovering polyester as staple fibers.

Similarly, the decolorized cotton or cellulosic material may be recycled in a way known per se, e.g. by mechanically providing cotton or cellulosic staple fibers that can be worked into a yarn.

In particular with a pre-consumer material consisting in garments or fabrics, the said garments or fabrics may be de-colorized to a greige status (undyed) and recycled by subsequent dyeing or printing, or both, of the treated garment.

The problem is solved by means of the process according to claim 1 and by a plant according to claim 10.

The invention thus relates to a process for recycling waste textile containing or consisting in polyester fibers comprising disperse dyes for said polyester fibers, or said waste textile comprising or consisting in dyed cotton fibers comprising indigo or indigoid dyes, by removing said dyes from said waste textile, characterized in comprising the following steps:
a) providing an amount of said waste textile in an extraction chamber and heating said chamber,
b) circulating through said extraction chamber and said waste textile a solvent suitable to remove from the waste textile said dyes;
c) feeding the solvent exiting said extraction chamber back to the extraction chamber to increase the amount of dyes removed from said waste textile;
d) evaporating at least part of the solvent obtained in step c) in an evaporation chamber;
e) condensing the evaporated solvent in at least one condensation chamber.

According to an aspect of the invention the process further comprises the steps of: f) feeding at least part of the condensed solvent directly or indirectly to said extraction chamber and g) repeating steps b) - f) until removal of dyes.

According to an aspect of the invention, it is provided a process for recycling waste textile containing polyester fibers and dyes, namely disperse dyes, which comprises the step of removing from said waste textile the disperse dyes by means of a solvent that is selected from dimethylformamide (DMF) and dimethylacetamide (DMAC), by circulating (i.e. flowing) the said solvent through the waste textile in an extraction chamber until dyes are removed. Advantageously, polyurethanic material, if present, is removed from the waste textile.

According to an aspect of the invention, it is provided a process for recycling waste textile containing cotton and/or cellulosic fibers and dyes, namely indigo or indigoid dyes, which comprises the step of removing from said waste textile the indigo or indigoid dyes by means of a solvent that is selected from dimethylformamide (DMF) and dimethylacetamide (DMAC), by circulating (i.e. flowing) the said solvent through the waste textile in an extraction chamber until dyes are removed. Advantageously, a polyurethane material, if present, is removed from the waste textile.

As disclosed in greater detail in the following description, the solvent (i.e. DMF or DMAC) is circulated by feeding solvent to an extraction chamber (that is static and contains the waste textile) flowing the solvent through textile material and chamber, and preferably feeding at least once the solvent exiting said extraction chamber back to the extraction chamber and through the textile to increase the content of dyes removed from the textile. In the following description and claims with the word "solvent" it is meant dimethylformamide (DMF) or dimethylacetamide (DMAC).

Advantageously, at least part of the solvent (that is containing dyes removed from the fabric) is fed to an evaporation chamber to be distilled and re-used in the process by condensing the evaporated solvent and feeding at least part of the condensed solvent to said extraction chamber. The content of dyes (and possibly of elastomeric material) in the waste textile decreases with every solvent passage through the waste textile. At the same time the content of dyes, namely disperse dyes and indigo/indigoid dyes, and, if present, of elastomeric material in the evaporation chamber is increased with time.

Eventually, the solvent containing concentrated dyes and possibly elastomeric material may be recovered from said evaporation chamber or from a different container by distillation, leaving the dyes and the possibly present elastomeric material as a solid after removal of the solvent.

In the process, the textile materials, e.g. fabrics or garments or fibers, are housed in the extraction chamber, which is still, i.e. static. The textile material is, too, in a still, i.e. static, condition apart for possible movement imparted by the flow of the solvent that is circulated, e.g. with a pump, through the static extraction chamber and through the textiles.

Fabrics that may be recycled by means of the claimed process are those of polyester sport apparel, e.g. T-shirts and garments printed with decorations on a thin layer or membrane of polyurethane material applied to the garment. The polyurethane layer is dissolved by the solvent with the inks that form the decorative element (e.g. a logo or a number etc.).

In the following description reference is made to "polyurethane material" or to PU material; this term is encompassing an elastomeric material (such as elastane and spandex) used in the yarns (usually in the yarn's core) and any other polyurethane material possibly present on or in the fabric, e.g. as part of a decoration (e.g. a printed decoration) as above discussed.

In the following description reference is made to polyester fibers to encompass any fiber, such as staple fibers and polyester continuous filaments in any state (e.g. textured, POY, FDY, etcetera).

In the following description reference is made to cotton fibers to encompass cotton fibers and cellulosic fibers in general.

The re-circulation, i.e. repeated circulation, or repeated flow, of the solvent through the extraction chamber and the waste textile allows to increase the time in which the waste textile is in contact with the solvent. Said increase of time allows to reduce the amount of solvent to be used and thus, eventually, the overall process time needed to remove the dyes from the waste textile.

Advantageously the ratio of waste textile (weight, kg) to solvent (volume, liters) is in the range of 1:8 to 1:12, preferably 1:10. This ratio allows to reduce environmental impact of the recycling process.

In an embodiment, the solvent containing dissolved dyes, and possibly also PU material that leaves the extraction chamber, is fed back to the extraction chamber at least once in order to be re-circulated through the waste material so as to increase the content of removed dyes and PU material in the solvent. The solvent is therefore subject to (preferably continuous) recirculation in the extraction chamber containing waste textile, thus allowing to increase the amount of time the same solvent contacts the waste textile.

In an embodiment, the solvent exiting the extraction chamber is fed to the evaporation chamber to be distilled; the distilled and condensed solvent is fed back to the extraction chamber.

In a preferred embodiment a part of the solvent, preferably after recirculation for a selected amount of time, is fed to an evaporation chamber where it is distilled by evaporation and condensation of the solvent. The distilled solvent is fed back to the extraction chamber or, in a preferred embodiment, to a solvent reservoir from which it is eventually fed to the extraction chamber when needed.

According to a preferred aspect of the invention, the solvent exiting the extraction chamber is filtered. The filtering of the solvent maximises the quantity of the waste textile that remains in the extraction chamber while maintaining the solvent free from solid bodies that would jeopardize the final product's quality.

According to a possible embodiment, the solvent is filtered by a filtering basket housing the waste textile in the extraction chamber. Advantageously the filter basket may be a rigid structure, e.g. a metal structure, provided with filtering openings along its surface to enable the solvent flow. Housing the waste textile in a filter basket allows to constrain the flow of solvent through the waste textile in a closed volume without stirring the fabric/textile pieces.

According to a possible aspect, at least part of the process, e.g. steps d) and e), is carried out under reduced pressure, i.e. the evaporation and condensation parts of the plant are connected to a source of reduced pressure. Because steps d) and e) are carried out under reduced pressure it is possible to decrease the temperature needed to evaporate the solvent in the evaporation chamber. A lower evaporation temperature results in preventing degradation, or in a negligible degradation, of the solvent in the plant, so that the same solvent may be used for several processes.

In an embodiment, a suitable pressure value in the evaporation chamber (and possibly in other parts of the plant connected with the evaporation chamber) is in the range of 20 to 100 mbar, preferably 35 to 100 mbar, most preferably 40 to 80 mbar.

According to a possible aspect, the process comprises the step of heating the extraction chamber, thereby heating the solvent that flows through said chamber (and the waste textile). Advantageously, the extraction chamber is heated to a temperature that results in increasing the temperature of the solvent inside the extraction chamber to a value that does not result in degradation of the solvent. The increase of temperature of the waste textile and solvent is preferably such as to decrease the time required to dissolve and remove the dyes and any PU material that may be present in the waste textile.

In an embodiment, the solvent is re-circulated by means of a pump. Advantageously the recirculation of the solvent by means of a pump allows to increase the number of times that a same portion of waste textile is contacted by a volume of solvent in which the waste textile is subject to the action of the solvent which would therefore speed up the removal of dyes (and PU material if present) from the waste textile.

Furthermore, differently from processes known in the art, the waste textile is kept in the extraction chamber in a still (i.e. static) position e.g. the waste textile is not subject to stirring by means of, for example, stirring rotors. Similarly, in a preferred embodiment the extraction chamber and the filtering basket housing the waste textile may be configured to be in a still and static condition, e.g. the basket is not rotated. In an embodiment, the textiles completely fill the basket in the extraction chamber, so that they remain in a static condition when the solvent is circulated, i.e. pumped into and out of the extraction chamber.

In an embodiment the waste textile is compressed in the basket to use the basket volume to the maximum; advantageously the compression of the waste textile increases productivity of the process.

Advantageously, having the textile material, e.g. the fabrics, in a static condition dramatically reduces the amount of possibly present staple fibers, e.g. cotton and cellulosic fibers, that are loosened or broken and become detached from the textile material during the process.

According to a possible aspect, steps d) and e) are carried out under reduced pressure and the solvent is heated to a temperature value that is below the boiling point of the solvent at the selected pressure in the evaporation chamber, preferably below 100°C to prevent degradation of the solvent.

Suitable solvents are dimethyformamide (DMF) and dimethylacetamide (DMAC). DMF and DMAC are polar solvents that were surprisingly found to be suitable to remove disperse dyes at the process temperature conditions. DMF and DMAC are also able to dissolve PU and elastomeric materials that might be present in or on the waste textile.

Advantageously, the claimed solvents can remove dyes with no or extremely reduced degradation of the polyester or cotton fibers in the textile under the claimed process conditions. In fact the following results were observed for polyester: decrease of IV (Intrinsic viscosity) around 3% (measured according to BS EN ISO 1628-5 : 2015) and decrease of Tensile Strength around 5% (measured according to ASTM D5034-21).

According to a possible aspect, the extraction chamber is under reduced pressure and the solvent temperature, in the extraction chamber is above 80°C, preferably 85 to 100 °C, most preferably 85 to 95°C.

Another object of the invention is a plant to carry out the above discussed process for recycling waste textile containing polyester fibers by removal of dyes, namely disperse dyes, or for recycling a waste textile containing cellulosic fibers by removal of indigo and indigoid dyes, Advantageously, a PU material possibly present in the fabric is removed.

According to the invention, the plant comprises an extraction chamber configured to contain a waste textile that includes disperse dyes and/or indigo or indigoid dyes, and possibly also PU material, and a solvent selected from DMF and DMAC.

The extraction chamber preferably comprises at least a heater. The plant further comprises circulation means to circulate the solvent, preferably at least once, through said extraction chamber, an evaporating chamber configured to collect the solvent containing dissolved dyes and to evaporate at least part of the solvent to be resent to the extraction chamber, and at least one condensation chamber comprising a cooling system configured to condensate the solvent evaporated in said evaporation chamber and feed said condensed solvent directly or indirectly to the extraction chamber.

In a possible embodiment the recovered solvent may be fed to a solvent reservoir, e.g. when the process is not operated.

According to a preferred embodiment, the extraction chamber of the plant comprises filtering means, preferably a mesh filter basket to contain the waste textile. As previously mentioned, filtering means in the extraction chamber allows to contain the waste textile and small fibers possibly detached from the textile, in the extraction chamber.

According to an aspect of the invention, the plant is connected to a reduced pressure circuit. Preferably said circuit includes a vacuum pump. Preferably the extraction chamber and the condensation chamber are connected or connectable with said reduced pressure circuit.

According to a possible aspect the reduced pressure circuit of the plant is connected to said at least one condensation chamber. Preferably there are two condensation chambers connected in series to prevent solvent vapours to leave the plant.

According to a possible aspect the solvent collection tank, i.e. the solvent reservoir, is connected by suitable pipes, or conduits, to the extraction chamber and to the condensation chamber. Advantageously the solvent collection tank could contain the solvent which is removed from the evaporation chamber.

Alternatively, the solvent contained in the solvent collection tank can be fed to the extraction chamber before step b) in which the solvent is circulating through the extraction chamber and the waste textile to dissolve and remove the elastomeric material from the waste textile. Advantageously, the solvent contained in the solvent collection tank and fed back to the extraction chamber can therefore provide solvent which can be recirculated through said extraction chamber and said waste textile to dissolve and remove the elastomeric material from the waste textile after a step of condensation in at least one condensation chamber.

According to a possible aspect, the solvent collecting tank is connectable to the condensation chamber to selectively receive the condensate solvent.

According to a possible aspect the evaporating chamber comprises a mixer, or stirrer, to improve the evaporation of at least part of the solvent from the solution of elastomeric material present in the evaporation chamber so as to increase the amount of solvent distilled from the evaporation chamber.

Further aspects and advantages in accordance with the present disclosure will be discussed more in detail with reference to the enclosed drawings, given by way of non-limiting example, wherein:
- Fig.1 shows a schematic representation of a plant according to a possible embodiment of the present invention;
- Fig. 2 is a flow chart illustrating an extraction process according to the invention and
- Fig.3 shows 15 samples of polyster fabrics dyed or printed before and after the treatment according to the invention.

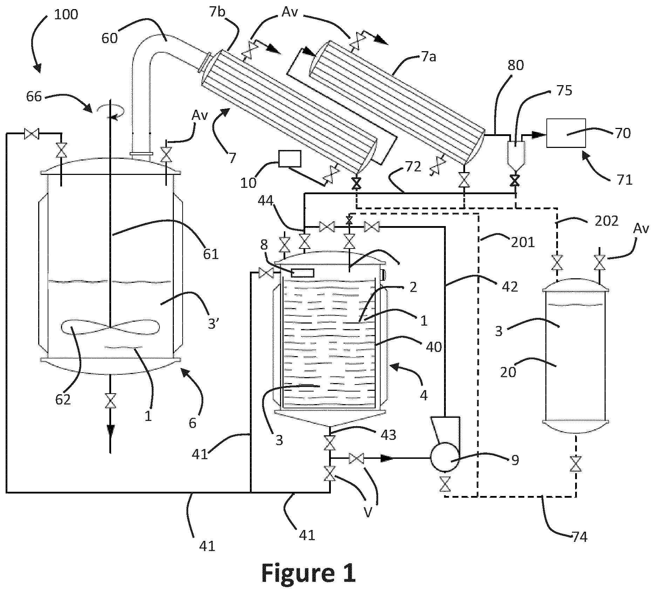

With reference to the exemplary embodiment of fig. 1, a textile recycling plant 100 comprises an extraction chamber 4 configured to contain a waste textile 2 that is a textile comprising polyester fibers 1 dyed with disperse dyes. In an embodiment, the textile comprises cellulosic fibers, particularly cotton fibers, dyed with indigo and indigoid dyes. Extraction chamber 4 is configured to receive and contain a solvent 3 (DMF or DMAC) suitable to remove the dyes 1 and dissolve a PU material possibly present. The extraction chamber 4 is connected to a re-circulating circuit 42 in which the solvent 3 exiting the extraction chamber from chamber outlet conduit 43 can be recirculated to the extraction chamber 4 through chamber inlet conduit 44 by circulating means 9. Preferably said circulating means 9 is a pump. Valves V are located on the circuit ducts to control the flow of solvent.

In the embodiment of Fig. 1, the extraction chamber 4 is connected to an evaporation chamber 6 through conduit 41. The extraction chamber 4 is connected to a condensation chamber 7 through conduit 72. The extraction chamber 4 is also connected to a solvent collection tank 20 through a conduit 201. Suitable valves V are provided on the cited conduits to selectively direct the flow of solvent to the required component of the plant.

In a possible embodiment the process of the invention preferably provides for the solvent containing the extracted dye to be filtered to remove fibers of other materials than the elastomeric one, e.g. to remove cotton fibers. Preferably the extraction chamber 4 comprises filtering means, such as a mesh filter basket 40, to contain the waste textile 2 comprising the dyes 1.

The mesh filter basket 40 is provided with openings not shown in figure 1, which allow the solvent to flow inside the entire volume of the extraction chamber 4 and at the same time to keep the waste textile 2 inside the mesh filter basket 40. In a preferred embodiment the filtering basket is in stainless steel or includes a non-woven fabric that lines it internally and acts as a filter; the non-woven fabric is resistant to the solvent used in the extraction chamber and may be used alone or may be fixed to or housed by a metal support such as filter basket 40 so as to retain fibers or particles that detach from the textile material.

According to a possible aspect, the extraction chamber 4 comprises at least a heater 3. Said heater 3, during the process, heats the solvent (and the waste textile 2) in the extraction chamber 4 to facilitate extraction of the dyes and any PU material from the waste textile.

The plant further comprises an evaporating chamber 6. Said evaporating chamber 6 is configured to collect, i.e. to receive, the solution 3' containing solvent 3 and dissolved dyes (possibly PU material) 1 that is obtained by recirculation of solvent in chamber 4 and to evaporate at least part of the solvent from the solution 3' to recover solvent 3 to be used in the extraction step. As previously mentioned, the evaporation chamber 6 is connected to extraction chamber 4 by conduit 41.

According to a possible aspect, the evaporation chamber 6 comprises stirring means, e.g. a mixer 66. Typically, as known in the art, a mixer 66 comprises a rotating rod 61 and a plurality of protrusions 62. The rotation of the protrusions 62 inside solution 3' maximises the evaporation of solvent 3 from the same. Evaporation chamber 6 is also provided with heating means to bring the solvent therein contained, under reduced pressure, to its boiling point, as below detailed.

In order to recover the evaporated solvent, the plant further comprises at least one condensation chamber 7. The evaporation chamber 6 is fluidically connected to condensation chamber 7 through a duct 60. In the preferred embodiment shown in the figures the plant is provided with two condensation chambers 7a, 7b arranged and connected in series.

The condensation chamber 7 comprises a cooling system 10 configured to condensate the solvent evaporated from solution 3' housed in the evaporation chamber 6 and to feed through conduit 72 the condensed solvent to at least one of extraction chamber 4 and a solvent collection tank 20. In other words, the solvent 3 in the condensation chamber reaches the dew point allowing the solvent to condense and to be fed back to the extraction step (if the process is operated) in extraction chamber 4 or to a solvent collection tank 20, or to both.

In the shown embodiment the plant is connected to a reduced pressure circuit 71 including a vacuum pump 70 and a separator element 75 in order to collect the solvent 3 which might flow back in the extraction chamber 4 or in the solvent collection tank 20 (batch process). Preferably, the vacuum circuit is connected to the condensation chamber that is connected to the evaporation chamber. Thus, at least evaporation chamber 6 and condensation chamber(s) 7 are kept at a reduced pressure during the invention process. The vacuum pump is advantageously configured to generated a reduced pressure in the evaporation chamber that is in the range of 20 mbar to 100 mbar, preferably 35 to 100 mbar, most preferably 40 to 80 mbar.

Advantageously, the reduced pressure circuit 71 is connected to the at least one condensation chamber 7 through conduit 80; in the embodiment of figure 1, which includes condensation chambers 7 and 7a, vacuum circuit 71 is connected to the end portion of chamber 7a, so as to condensate in the two chambers all the evaporated solvent before it reaches the end of the condensation chambers system.

At least the major components of the plant, i.e. extraction chamber 4, evaporation chamber 6, condensation chambers 7, 7a, 7b and solvent collection tank 20, are provided with ducts and valves Av to connect the plant to the atmosphere when a reduced pressure in the plant is not required.

As above mentioned, preferably the plant further comprises a solvent collecting tank 20 to store solvent 3. Said solvent collecting tank 20 is connected to the extraction chamber 4 through conduit 74, 201 and is connected to the evaporation chamber 6 through conduit 75. According to a possible embodiment, the condensation chamber(s) 7 is/are connected to the solvent collecting tank 20 through conduit 202 provided with valves to direct the solvent flow either to chamber 20 or to extraction chamber 4. Preferably, the stored solvent 3 in the solvent collecting tank 20 can be directed to the extraction chamber 4 through conduits 74, 201 under reduced pressure through the reduced pressure circuit 71 and vacuum pump 70.

The invention further provides a process for recycling waste textile 2 containing polyester fibers and disperse dyes or for recycling a waste textile containing cotton/cellulosic fibers and indigo or indigoid dyes; the waste textile may also contain PU material, e.g. as elastomeric material in the form of fibers; PU material may also be present in the form of decorations printed on the fabric, e.g. by means of a layer of PU applied to the fabric.

The fabric may be treated in a known way, e.g. by shredding or cutting into small pieces, or it may be left in its original garment form, e.g. as a pair of pants or a T-shirt; typically, shredding is carried out after removal of parts such as plastic labels or zippers, metal parts etcetera.

Initially, in step a), an amount of waste textile 2 is loaded into extraction chamber 4. Advantageously, the waste textile material is packed and compressed into the basket of the extraction chamber.

In subsequent step b), solvent 3 is fed to chamber 4 and is passed through the extraction chamber and through the textile to dissolve and remove the dyes 1 and a PU material possibly present, from the waste textile 2. Preferred solvents for the disperse dyes are DMF and DMAC. In a preferred embodiment the solvent is fed into the extraction chamber and flows through the waste textile and out of chamber 4 in a controlled flow; such a flow is preferably obtained with a pump 9 that forces the solvent along the required path.

In step c) the solvent 3 that exits the extraction chamber 4 through outlet duct 43 is directed along re-circulating circuit 42 to flow back to the extraction chamber 4 through inlet duct 44 at least once to extract more dyes and increase its content in the solvent. In other words, the recirculation of the solvent through circuit 42 allows to maximise the concentration of dissolved dyes 1 in the solvent.

Preferably a certain volume of solvent is fed through the extraction chamber and waste textile at least three times, i.e. in three cycles. Typically, in each cycle solvent is circulated for at least 70 minutes, preferably at least 80 minutes, more preferably at least 90 minutes and possibly up to 150 minutes. After a cycle is completed preferably the solvent is sent to the evaporation chamber and clean solvent is used for the successive cycle.

During the extraction process at least a part of the plant, namely the evaporation chamber and the condensation chambers, is kept under reduced pressure by connecting the plant to circuit 71. Suitable pressure values in the plant, namely chambers 4, 6 and 7, is about 20 to 100 mBar, preferably 35 to 100m mbar, more preferably 40 to 80 mbar. Advantageously the reduced pressure will lower the boiling temperature of the solvent to facilitate evaporation of the solvent in step d) so as to reduce or prevent degradation of the solvent.

To enhance extraction of the dyes (and possibly present PU material), the extraction chamber 4 is heated. According to an aspect the temperature of the solvent in the extraction chamber 3 is equal or above 80°C, in the range of 85 to 100 °C, preferably 80-90 °C, possibly 81-90°C, namely 85°C. The extraction chamber is normally not connected with reduced pressure circuit 71. In a preferred embodiment, in order to transfer solvent containing the extracted dyes from extraction chamber 4 to evaporation chamber 6, chamber 4 is connected to chamber 6 that, as above discussed, is under reduced pressure: once the two chambers are connected through duct 41 the liquid content of chamber 4 will be transferred to chamber 6.

Solvent transfer from solvent reservoir 20 to extraction chamber 4 may also be carried out by temporarily reducing pressure in chamber 4 before connecting it with reservoir 20. In general, apart from using pump 9 for circulating solvent in and out of the extraction chamber, the polar solvent may be transferred to various parts of the plant by using a difference in pressure between said plant parts.

According to a possible aspect, the solvent 3 exiting the extraction chamber 4 is filtered through the mesh filter basket 40. In other words, said filtering allows to keep the waste textile 2 inside the mesh filter basket 40 during step c) allowing only the solvent 3 to exit the extraction chamber 4 through the outlet 43, the re-circulating circuit 42 and flow back to the extraction chamber 3 through the inlet 44 while keeping the waste textile 2 inside the extraction chamber 4.

Once the solvent, containing the dyes 1 and any PU material extracted as described at step c), has been re-circulated through the textile material enough times, i.e. for a total time long enough to result in a required extraction of the elastomeric material, said dye-charged solvent is directed through the conduit 41 to the evaporation chamber 6. In chamber 6 at least part of the solvent evaporates to be recycled into the process.

As above mentioned, evaporation and condensation steps are preferably carried out under reduced pressure thanks to reduced pressure circuit 71 and vacuum pump 70. The solvent 3 in the evaporation chamber 6 can thus be heated to a temperature value that is below the its boiling point at atmospheric pressure, preferably below 100 °C, to prevent degradation of the solvent. The temperature in the evaporation chamber is in the range of 75 to 95 °C, preferably in the range of 80 to 90 °C. The reduced pressure in the evaporation chamber at the above recited temperature is in the range of 20 mbar to 100 mbar or preferably 35 to 85 mbar, more preferably 40 to 80 mbar.

In step e) the solvent vapour flows along the conduit 60 to condensation chambers 7 where the vapour condenses. In the embodiment shown in figure 1 there are provided two condensation chambers 7a and 7b that are arranged and connected in series. The condensed solvent 3 is fed to the extraction chamber 4 through conduit 72; alternatively, the liquid solvent may be fed to solvent reservoir 20 through conduit 202 to be stored there or to be pumped back into extraction chamber 4 via conduit 74.

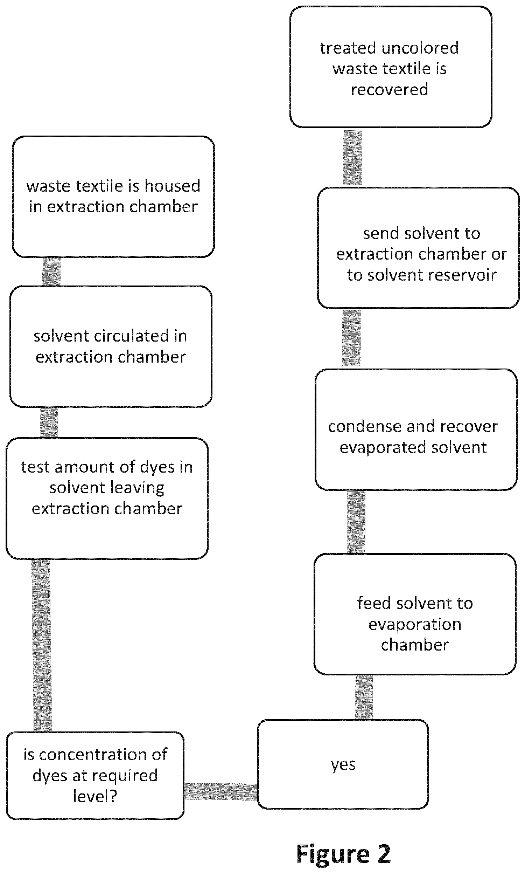

In a possible embodiment, as schematically shown in fig. 2, the DMF solvent is recirculated through the extraction chamber until a required reduction of dyes is detected (e.g. visually) before sending it to evaporation chamber 6. In a possible embodiment, the solvent is circulated through the fabric at least 3 times for about 90 minutes each. Preferably clean solvent is fed into the system in each cycle.

At the end of the extraction process it may be carried out a further step to remove and recover solvent from said waste textile, preferably said solvent recovering step is selected from pressing, squeezing, spinning or centrifuging the solvent-soaked waste textile.

The invention will be further illustrated by reference to the following non limiting examples.

### EXAMPLE 1

*1.5 kg of textile waste including polyester, polyester-elastane, polyurethane printed polyester preconsumer, post consumer fabrics, fibers were collected. The textile waste housed in a stainless-steel filtering basket. The 1.5 kg of textile waste were put in an extraction chamber heated to 90-95°C and subjected to recirculating of 15 liters of DMF 3 times for 90 minutes (3x90' or 270' in total). Sample*/*DMF flotte was 1:10. During re-circulation the solution exiting* was *sent to an evaporation chamber heated at 85*±*5°C at 40-80 mbar; the solvent was evaporated and stored in a solvent collection tank. At the end of the extraction process the textile waste* was *squeezed to remove the remaining solvent that was added to the solution in the evaporation chamber. The elastomeric material, dye and polyurethane print are separated in solid form after the DMF is completely removed. At the end of the process, the mass loss of waste textiles was 150 grams (%10). No elastane was found in the treated textile waste after the process. It was observed that the prints and colors of the waste were completely removed to provide a white greige fabric.*

### EXAMPLE 2

*1.8 kg of colored pre-consumer garments (T-shirts) were collected but not cut or shredded. The garments were put in an extraction chamber heated to 90-95°C and subjected to recirculating of 19 liters of DMF 3 times for 90 minutes (270' in total). During dye extraction the solution exiting was sent to an evaporation chamber heated at 85*±*5°C at 60-70 mbar; the solvent was evaporated and stored in a solvent collection tank (20) (batch process). At the end of the extraction process the garments was pressed to remove the remaining solvent that was added to the solution in the evaporation chamber. The dyes are separated in solid form after the DMF is completely removed. The garments are in a greige condition such that they may be recycled by being dyed again, and*/*or printed, in a different color.*

### EXAMPLE 3

*2 kg of fabric waste were collected. The 2 kg of fabric were put in an extraction chamber heated to 90-95°C and subjected to recirculating of DMAC for 3 cycles for 90 minutes (3x90' or 270' in total). During re-circulation the solution exiting* was *sent to an evaporation chamber heated at 85*±*5°C at 40-80 mbar; the solvent was evaporated and stored in a solvent collection tank (20) (batch process). At the end of the extraction process the fabric was pressed to remove the remaining solvent that was added to the solution in the evaporation chamber. The elastomeric material ,dye and polyurethane print are separated in solid form after the DMAc is completely removed from the dye-containing solution.*

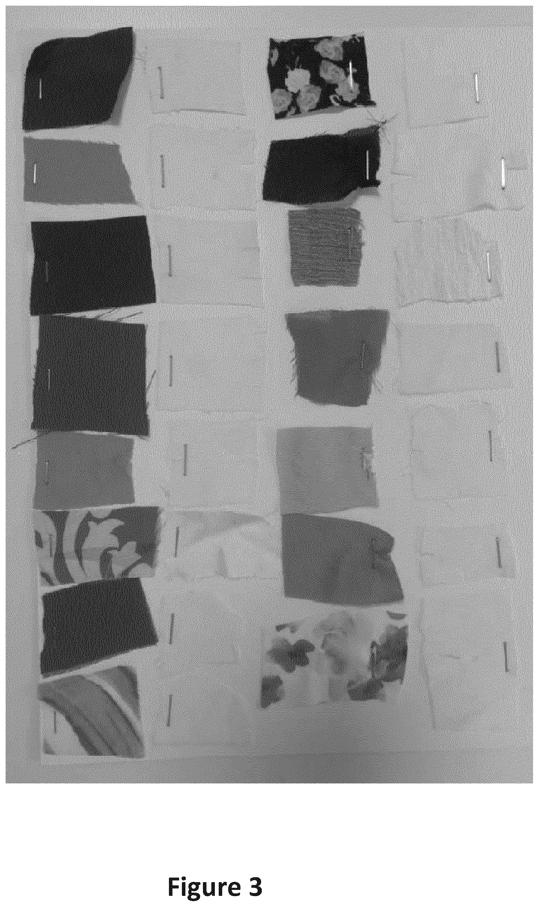

Figure 3 shows the result of the invention process applied to 15 different polyester and cotton fabrics, dyed or printed: it is remarkable that dyes and printed matter have been completely removed from all the fabrics, as clearly visible from the white fabric samples obtained after the process. The obtained white fabrics may be recycled as a white polyester or cotton material.

The claimed process and apparatus thus allow to remove disperse dyes from polyester fibers and indigo or indigoid dyes from cotton fibers. The resulting textile may then be recycled in a way known per se.

## Claims

1. A process for removing dyes from waste textile (2), said waste textile containing or consisting in dyed polyester fibers comprising disperse dyes for said polyester fibers (1), or said waste textile comprising or consisting in dyed cotton fibers comprising indigo or indigoid dyes, **characterized in** comprising the following steps:
a) providing an amount of said waste textile in an extraction chamber (4) and heating said chamber (4),
b) circulating through said extraction chamber (4) and said waste textile (2) a solvent (3) suitable to remove from the waste textile said dyes;
c) feeding the solvent exiting said extraction chamber (4) back to the extraction chamber to increase the amount of dyes removed from said waste textile;
d) evaporating at least part of the solvent obtained in step c) in an evaporation chamber (6) ;
e) condensing the evaporated solvent (3) in at least one condensation chamber (7).

2. A process according to claim 1, wherein said solvent is selected from dimethylformamide (DMF) and dimethylacetamide (DMAC).

3. A process according to claim 1 to 3, wherein said waste textile further comprises polyurethane material selected from filaments and layers.

4. A process according to any claim 1 to 4, wherein said textiles and said extraction chamber are in a static condition during said extraction step.

5. A process according to any previous claim, further comprising the steps of:
f) feeding at least part of the condensed solvent (3) directly or indirectly to said extraction chamber (4);
g) optionally repeating steps b) - f) until removal of dyes, wherein at least said evaporation and condensation steps (d, e) are carried out under reduced pressure.

6. A process according to any previous claim wherein at least in step c) said solvent is circulated through the waste textile and extraction chamber and is fed back to said chamber by means of a pump (9).

7. A process according to any previous claim, wherein the removed dyes are recovered.

8. A process according to any previous claim, wherein the pressure in said evaporation chamber is in the range of 20 to 85 mbar, preferably 40 to 80 mbar and the temperature of the solvent in said evaporation chamber (6) is in the range of 75 to 95 °C, preferably 80 to 90 °C.

9. A process according to claim 8, wherein the solvent temperature in said extraction chamber is in the range of 80 to 100 °C, preferably 80 to 95°C, more preferably about 85°C.

10. A process according to any previous claim, further comprising a step of recovering solvent from said treated waste textile, preferably said solvent recovering step being selected from pressing, squeezing, spinning or centrifuging said waste textile.

11. A plant to carry out a process for removing dyes from a waste fabric according to any previous claim, **characterized in that** it comprises an extraction chamber (4) configured to contain a waste textile (2), said extraction chamber (4) preferably comprising at least a heater (8); a container for storing a solvent (3) suitable to remove said dyes from said waste textile; circulation means (9) to circulate said solvent at least once through said textile and said extraction chamber (4); an evaporation chamber (6) configured to collect the solvent containing dyes and to evaporate at least part of said solvent (3); at least one condensation chamber (7) comprising a cooling system (10) configured to condensate said solvent evaporated in said evaporation chamber (6) and means to store said condensed solvent.

12. A plant according to claim 11, wherein the extraction chamber (4) comprises filtering means, preferably a filtering basket (40) to house said waste textile (2).

13. A plant according to claim 11 or 12, wherein at least part of said plant is connected or connectable to a reduced pressure circuit (71), said circuit preferably including a vacuum pump (70) configured to generate a reduced pressure of 35 to 100 mbar, wherein said reduced pressure circuit (71) is connected or connectable to said evaporation chamber, preferably also to at least one condensation chamber (7) that is connected or connectable to said evaporation chamber.

14. A plant according to any claim 11 to 13, wherein said circulation means comprises a circuit (42) and a pump (9) for circulating solvent in and out of said extraction chamber (4).

15. A plant according to any claim 11 to 14, further comprising a solvent collecting tank (20) to contain said solvent (3), said solvent collecting tank (20) being connected or connectable to said extraction chamber (4) and to said condensation chamber (7).

16. A plant according to claim 15, wherein said condensation chamber (7) is connectable to said solvent collecting tank (20).

17. The use of a plant according to any claim 11 to 16 in a process of removing disperse dyes from a polyester dyed textile.

18. A process of recycling garments comprising or consisting in fabrics containing polyester yarns dyed with disperse dyes or fabrics containing cotton yarns with indigo or indigoid dyes, wherein said dyes are removed from said garments with a process according to any claim 1 to 10 and said garments are treated to provide pre-consumer garments.
